# EUROPEAN PATENT APPLICATION

(11) **EP 4 284 008 A1**
(43) Date of publication of application: **29.11.2023**
(21) Application number: 23171008.8
(22) Date of filing: 02.05.2023
(51) Int. Cl.: H04N 23/55, H04N 23/52, G02B 27/28, G03B 17/56, H04N 23/70, H04N 23/81, H04N 7/15, H04N 23/75

(54) **SYSTEM AND TECHNIQUES FOR REFLECTION REDUCTION IN VIDEO DATA**

(30) Priority: 23.05.2022 US 202217664581
(71) Applicant: Plantronics, Inc., Santa Cruz, California 95060 (US)
(72) Inventor: SCHAEFER, Stephen Paul, Austin, 78729-8101 (US)
(74) Representative: Haseltine Lake Kempner LLP

(57) **Abstract**

Reflective surfaces and display devices adversely affect a videoconferencing camera. For example, reflections from bright lights may cause the camera to change exposure settings, resulting in participants appearing dimly lit. In another example, reflections of people or displayed images may be incorrectly used by automated image framing and tracking. Reflections from a surface are often polarized, as is light from many types of display devices. A polarizer in front of the camera is moved to provide different polarization angles relative to the camera, with images acquired at these different angles. The images are processed to determine a count of features, such as heads or faces, that are detected in the images. The angle that produces the minimum number of features may be subsequently used during acquisition of images by the camera for various purposes, such as videoconferencing.

## Description

### BACKGROUND

Visually reflective surfaces or sources of light in a room may produce reflections that are captured by a camera, such as when conducting a video conference. This may create unwanted effects in the processing of images acquired by the camera.

### BRIEF DESCRIPTION OF FIGURES

The detailed description is set forth with reference to the accompanying figures. In the figures, the left-most digit(s) of a reference number identifies the figure in which the reference number first appears. The use of the same reference numbers in different figures indicates similar or identical items or features. The figures are not necessarily drawn to scale, and in some figures, the proportions or other aspects may be exaggerated to facilitate comprehension of particular aspects.
FIG. 1A illustrates a system for reflection reduction in video data, according to some implementations.
FIG. 1B illustrates changing an angle of a polarizer relative to a camera, according to some implementations.
FIG. 2 illustrates an analyzed image of a first scene showing reflections and features detected, according to some implementations.
FIG. 3 illustrates an analyzed image of the first scene with a reduced count of features detected, according to some implementations.
FIG. 4 illustrates an analyzed image of a second scene showing display devices and features detected, according to some implementations.
FIG. 5 illustrates an analyzed image of the second scene with a reduced count of features detected, according to some implementations.
FIG. 6 illustrates a flow diagram of a process to determine a polarization angle that reduces unwanted features, according to some implementations.
FIG. 7 illustrates a flow diagram of another process to determine a polarization angle that reduces unwanted features, according to some implementations.
FIG. 8 illustrates a user interface to direct manipulation of a polarizer to reduce unwanted features, according to some implementations.
FIG. 9 illustrates a block diagram of a device to determine a polarization angle that reduces unwanted features, according to some implementations.

While implementations are described herein by way of example, those skilled in the art will recognize that the implementations are not limited to the examples or figures described. It should be understood that the figures and detailed description thereto are not intended to limit implementations to the particular form disclosed but, on the contrary, the intention is to cover all modifications, equivalents, and alternatives falling within the spirit and scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include", "including", and "includes" mean "including, but not limited to".

### DETAILED DESCRIPTION

A videoconference call is typically conducted by users in a conference room using a camera. The conference room may include walls, ceiling fixtures with light sources, a table, a whiteboard, monitors, etc. Some of these surfaces may be reflective. For example, glass walls, glossy tables, shiny whiteboards, or framed photos hanging on a wall may reflect light from light sources thereby causing reflections of users or objects on surfaces. These reflections may have adverse effects on how the camera operates, or how images acquired by the camera are processed. To prevent these adverse effects, as described in this disclosure, a polarizer may be placed within an optical path of the camera to remove at least a portion of these reflections. In particular, a polarization angle of the polarizer may be adjusted until the unwanted features are removed or significantly attenuated.

In one situation, reflective bright lights may cause a camera to change its exposure settings, resulting in participants of the videoconference being underexposed. In another situation, glass walls reflecting images of people may cause multiple reflections of the people to be included in the image. Image processing techniques that attempt to determine a region of interest to provide automated framing of the video may incorrectly include these reflections. In other situations, the display devices that are presenting video from the near or the far site of a videoconference may interfere with this automated framing. In some situations, the monitors in a room may be an unwanted distraction to the far site.

Traditional techniques to address unwanted features such as reflections of lights, reflections of people, display devices, and so forth have involved "masking" a specified region of the image. Masking may involve disregarding data from the specified region, modifying data from the specified region, redacting data from the specified region, and so forth. However, masking may require substantial setup and may not be automatically adjusted if there are changes to the camera, camera position, scene, and so forth. As a result, the masking may incorrectly result in masking of portions of an image that are desired.

Described in this disclosure are techniques for analyzing an image acquired by a camera and determining a polarization angle at which a polarizer removes unwanted features such as reflections or display devices. The polarizer is placed in an optical path of the camera, and the angle of polarization of the polarizer is varied with respect to a reference axis associated with the camera and a polarizer index. Light reflected from a surface tends to predominately exhibit a particular polarization angle. Likewise, light emitted by many display devices may also exhibit a particular polarization. In comparison, light reflected from an object such as a human head tends to reflect light of various different polarization angles. By adjusting the polarization angle of the polarizer, the polarized light from unwanted features such as reflections or display devices may be "nulled out", removed, or significantly attenuated before the light reaches the camera. For example, if reflected light has a linear polarization angle of 20 degrees, placing a polarizing filter at a 90 degree offset such as 110 degrees, will block the reflected light from reaching the camera.

In one implementation, the camera acquires an image of the scene with the polarizer at a first polarization. Image analysis, such as facial recognition, object recognition, or the like, is performed on the acquired image to determine a count of features depicted. These features may represent faces of users, heads of users, bodies of users, bright spots in the image, and so forth. A count of the detected features is associated with the first polarization. The polarization angle relative to the camera is then changed to a second polarization angle. A second image is acquired with the polarizer at the second polarization angle, and the second image is analyzed to determine a second count of features depicted in the second image.

Different polarization angles may be tested, and their respective counts of features depicted within each analyzed image are compared. The polarization angle that corresponds to a minimum count of features may then be selected and subsequently used. For example, a first polarization angle may correspond to detecting four features in an analyzed image, as a result of the user's head plus three reflections of the user on other surfaces. By contrast, a second polarization angle may produce a count of one feature when the three reflections of the user are removed by the polarizer.

In another implementation, different polarization angles may be tested to null out the reflections or brightness due to a display device. Some polarization angles may null out the display with features previously detected, thereby minimizing the total count of features in analyzed images.

Once a polarization angle that corresponds to the minimum count of features is determined, the polarization angle may be saved for subsequent use. The polarizer may be maintained at that polarization angle for use as a default setting for future video conferences in that conference room. If a change is detected at a later time or a trigger condition is met, the above process may be repeated to determine if an update to the polarization angle is needed. For example, if a predetermined amount of time has passed since the initial setup or the camera position is changed, various polarization angles may be tested again to determine if a new polarization angle is more effective at reducing the count of features.

By employing the polarizer and analysis to determine the polarization angle that produces the minimum number of features in the image, user experience during a video conference is vastly improved. By removing or attenuating the light from the unwanted features before acquisition by the camera, subsequent video processing is improved. For example, automated exposure and framing is improved, resulting in improved video quality sent to a videoconference far site. These systems and techniques may be used for other systems as well, such as video capture, remote inspection, and so forth.

### ILLUSTRATIVE SYSTEM

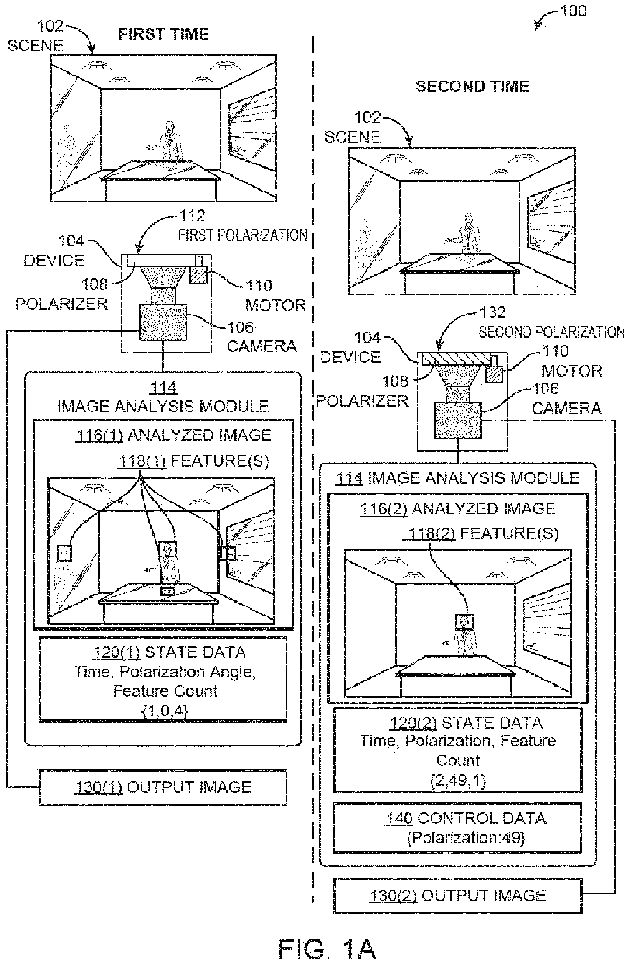

FIG. 1A illustrates a system 100 for changing the polarization angle of a polarizer. At a first time, a scene 102 is shown. The scene 102 may include, for example, a conference room with a user. The conference room may also include a floor, walls, ceiling, tables, etc. with some of those surfaces being reflective, such as glass walls, shiny tables, shiny whiteboards on a wall, bright lights from fixtures on the ceiling, etc. These reflective surfaces create reflections of the user or other objects and the lights from the ceiling fixtures.

A device 104 is used to acquire images of the scene 102. The device 104 includes a camera 106 with a field of view of the scene 102. The camera 106 operates to acquire raw image data representative of the scene 102. The camera 106 may be an imaging sensor, a depth sensor, a video sensor, or the like and may include a lens.

The device 104 also includes a polarizer 108 that is positioned directly in front of the camera 106 or in an optical path of the camera 106. The polarizer 108 changes the polarization of light that is incident on the camera 106. For example, the polarizer 108 may transmit light of a particular polarization, while absorbing or reflecting light with another polarization.

The polarization angle describes the angle of the polarizer 108 as generated between a reference axis associated with the camera 106 and a polarization index point. The polarization angle may be static or changed at one or more times using a motor 110. The motor 110 may be controlled to rotate the polarizer 108 to change the position of the polarizer 108, thereby changing the polarization angle between the polarizer 108 and the camera 106. For example, the motor 110 may rotate the polarizer 108.

The camera 106 acquires raw image data each time a polarization angle is set. As shown, the polarizer 108 is set to a first polarization 112 at a first time. The camera 106 acquires raw image data at the first time. The raw image data is transmitted to an image analysis module 114 for processing. The image analysis module 114 processes the raw image data and performs one or more image processing techniques. In one implementation, the image analysis module 114 may perform the image processing techniques on images acquired by the camera 106. For example, the image analysis module 114 may utilize one or more classifiers, trained neural networks, and so forth. These image processing techniques produce results representative of features 118. As shown in an analyzed image 116(1), the image analysis module 114 determines the features 118(1). One or more of the features 118(1) may be features of actual users, as well as reflections of the user on various surfaces.

State data 120(1) is generated by the image analysis module 114 to indicate information about one or more of the device, the acquired image, or the image processing results. For example, the state data 120(1) may indicate a time associated with the acquisition of raw image data by the camera 106 and the polarization angle that was used to acquire the raw image data. In some implementations, the state data 120(1) may also indicate the feature count associated with the analyzed image 116. As shown, the state data 120(1) indicates the raw image data was acquired by camera 120(1) at a time=1 using a polarization angle of 0 degrees relative to the camera and the analyzed image 116 was found to have 4 features.

Output image 130 provided by the device 104 may be used by other applications. In some implementations, the output image 130 may comprise a portion of raw image data acquired at a certain time. For example, the output image 130 may be processed to determine a region of interest, and that region of interest may be subsequently sent to a video conferencing app for use therein. For example, the contents of the raw image data within the region of interest may be used for framing, changing the camera settings, and so forth.

In this illustration, the output image 130(1) includes several unwanted features 118(1), such as reflections of the user, reflections of the overhead lights, and so forth. The images acquired by the camera are of the scene at a near site. Output data from the camera may be sent to another participating device for presentation, such as a display device located at a far site.

The system 100 also illustrates the scene 102 at a second time. At the second time, the polarization angle of the device 104 has been changed. This is accomplished by setting the polarizer 108 to a second polarization 132, which represents a second angle of the polarizer 108 relative to a reference axis associated with the camera 106 and a polarization index. The second polarization 132 may represent any angle that differs from the first polarization 112 by between 0 and 95 degrees. For example, the first polarization 112 may be set to 0 degrees, while the second polarization 132 may be set to 49 degrees.

At the second time, raw image data is acquired by the camera 106 with the polarizer 108 set to the second polarization 132. This raw image data is transmitted to the image analysis module 114. The output from the image analysis module 114 is depicted as analyzed image 116(2). In a similar fashion, the analyzed image 116(2) represents features detected at the second time. These features are illustrated as features 118(2). Given the use of a different polarization angle, the count of features in the analyzed image 116(2) is different from the count of features detected in the analyzed image 116(1). This is due to various portions of incident light being removed or attenuated by the polarizer 108.

Corresponding state data is generated as state data 120(2) to provide details associated with the second time, the second raw image data, and the second configuration. The state data 120(2) data may indicate that the second raw image data was acquired at a second time using a second polarization angle of 49 degrees. In addition, the state data 120(2) may also indicate that the image processing techniques yielded a count of one feature in the analyzed image 116(2).

Based on a comparison of the feature counts in the state data 120(1) and 120(2), the system determines the polarization angle that is more effective at reducing light from unwanted reflections reaching the camera 106. By minimizing the number of features 118 in an analyzed image 116, the system 100 effectively removes or attenuates features 118 that result from reflections, bright lights, certain display devices that utilize internal polarizers, and so forth. Thus, the features 118 that remain when using a more effective polarization angle are due to actual users and not reflections of the users on surfaces within the conference room. As such, the polarization angle associated with the second time is used as a default setting for future use of the device 106. Control data 140 indicates the polarization angle to be used for operating the device 106. As an example, the device 104 is operated with the polarizer 108 set to the second polarization 132 as specified by the control data 140. If the polarizer 108 is already set to the second polarization 132, the polarizer 108 is kept in the current configuration. Alternatively, if the polarizer 108 is not currently set to the second polarization 132, the motor 110 is controlled to rotate the polarizer 108 until the polarizer 108 is set to the second polarization 132 relative to the camera 106.

Output image 130(2) resulting from using the polarizer 108 at the second polarization 132 may be generated as output image 130(2). The output image 130(2) reflects the removal or attenuation of one or more of features due to bright lights, reflective surfaces, certain monitors, and so forth. A cropped portion of the output image 130(2) may be used to focus in on the area of interest to track the user during a video conference. For example, image framing may be enhanced using this cropped portion of the output image 130(2), given that at least some of the unwanted features have been removed. Accordingly, the algorithms used to determine a region of interest may operate more accurately as the unwanted features have been removed. Moreover, the exposure settings of the camera 106 would not need adjustments due to bright lights but would instead correspond to lighting near the region of interest that includes the user.

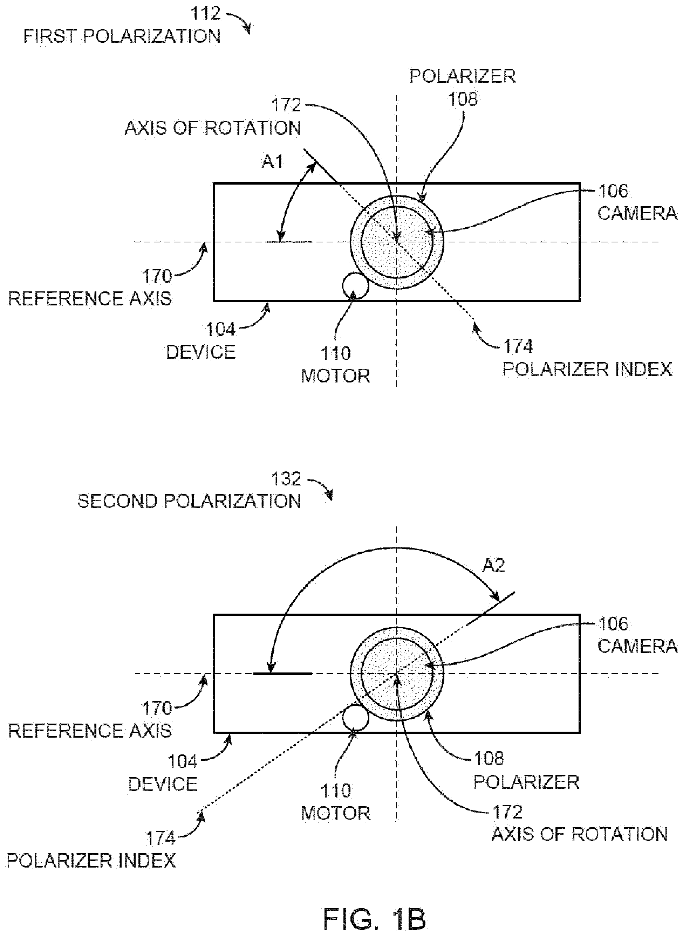

FIG. 1B illustrates changing an angle of the polarizer 108 from a first polarization 112 to a second polarization 132. The top of FIG. 1B illustrates the device 104, which includes the camera 106, the polarizer 108 placed in front of the camera 106, and the motor 110. To implement the first polarization 112, the motor 110 rotates the polarizer 108 about an axis of rotation 172 to create an angle A1 between a reference axis 170 and a polarizer index 174. The polarizer index 174 may be an arbitrary reference with respect to the polarizer 108. In some implementations the polarizer index 174 may be aligned with a polarization direction of the polarizer 108.

The bottom of FIG. 1B illustrates the implementation of the second polarization 132 by having the motor 110 rotate the polarizer 108 about the axis of rotation 172 to create an angle A2 between the reference axis 170 and the polarizer index 174. It is understood that the reference axis 170 and the polarizer index 174 are arbitrary points that are used to depict the different angles, A1 and A2, created between the polarizer 108 and the camera 106 or other portion of the device 104.

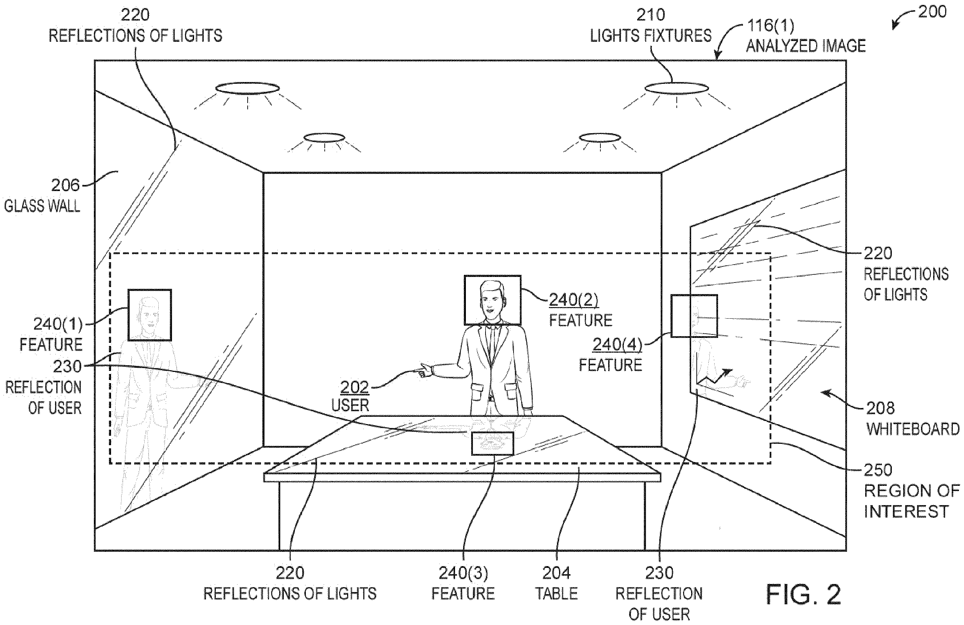

FIG. 2 depicts at 200 an analyzed image 116(1) of the image analysis module 114 when the polarizer 108 is set to the first polarization 112. For example, the polarizer 108 may be set to the first polarization 112 which represents a polarization angle of 0 degrees between the polarizer 108 and the camera 106.

As shown, the analyzed image 116(1) depicts an actual user 202 in a conference room that is within a field of view of the camera 106. The analyzed image 116(1) also depicts other components in the conference room, such as a table 204, a glass wall 206 on one side, a whiteboard 208 on an opposite wall, and light fixtures 210 on the ceiling.

Some of these surfaces may be reflective. For example, the table 204, glass wall 206, and whiteboard 208 may be reflective surfaces that reflect lights and other objects in the room. As shown, the bright lights used in light fixtures 210 may produce reflections of lights 220 on the table 204, on the glass wall 206, and on the whiteboard 208. Similarly, the bright lights used in the light fixtures 210 may also produce reflections of the user 202, shown as reflections of user 230 on the table 204, on the glass wall 206, and on the whiteboard 208. It may be noted that a different number or configuration of walls, tables, whiteboards, and fixtures in a conference room may yield different reflections on the various surfaces.

The analyzed image 116(1) also shows the various features 118 that were detected within the raw image data acquired by the camera 106 with the polarizer 108 at the first polarization 112. These features 118 are shown as feature 240(1), which is a reflection of the user 202 on the wall 206, feature 240(2), which is the actual user 202 in the room, feature 240(3), which is a reflection of the user 202 on the table 204, and feature 240(4), which is a reflection of the user 202 on the whiteboard 208. Thus, the feature count for the analyzed image 116(1) is 4, which represents the user 202 and 3 reflections of the user 202 on the various reflective surfaces.

State data 120(1), which corresponds to the analyzed image 116(1), indicates a count of 4 features. The output image 130(1) would focus on all 4 features as participants of a video conference, which would adversely affect the region of interest and the exposure setting of the camera 106, particularly when performing automatic framing and the like. For example, the resulting region of interest for analyzed image 116(1) would be region of interest 250 that includes the user 202 and the three reflections of the user 230.

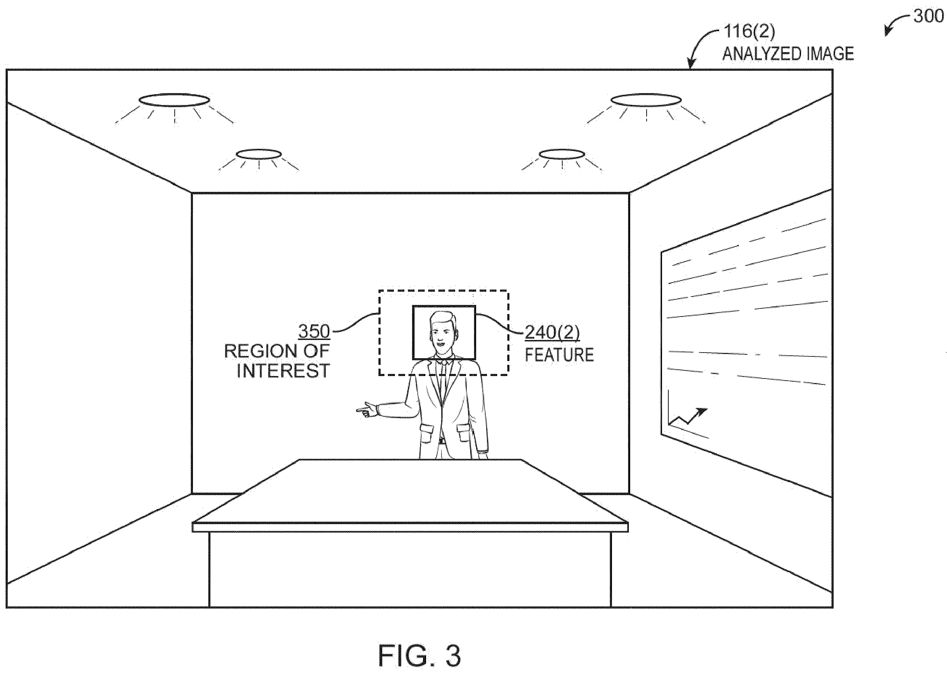

FIG. 3 depicts at 300 an analyzed image 116(2) from the image analysis module 114 when the polarizer 108 is set to a second polarization 132, which is different from the first polarization 112. For example, the polarizer 108 may be set to the second polarization 132, which results from an angle of 49 degrees between the polarizer 108 as indicated by the polarizer index 174 and a reference axis 170 associated with the camera 106. The analyzed image 116(2) illustrates the same components as FIG. 2 but shows a difference in the count of features 118 detected at the second time.

The analyzed image 116(2) only includes one feature, shown as feature 240(2). The feature 240(2) represents the user 202 in the conference room. It does not include the other features 118 detected in the analyzed image 116(1) as the second polarization angle eliminates or attenuates those features 118. For example, by using the polarizer 108 with the second polarization 132, the features in FIG. 2 that were reflections of the user 202 on the glass walls 206, table 204, and whiteboard 208 are removed or attenuated.

The analyzed image 116(2) showing only one feature 240(2) helps confirm that the second polarization 132 yields a minimum count of features 118. Given that the second polarization 132 yields the minimum number of features 118, the second polarization 132 is saved as a setting (in control data 140) for operating the device 104 in the future. The region of interest for analyzed image 116(2) would be region of interest 350, which includes the user as the one feature 240(2).

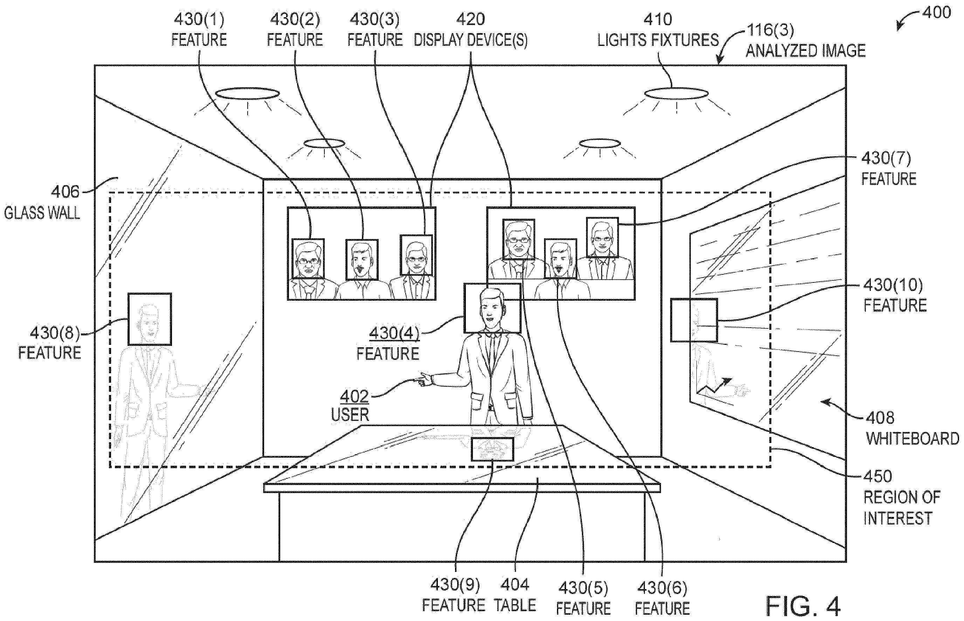

FIG. 4 depicts at 400 an analyzed image 116(3) from the image analysis module 114 when the polarizer 108 is set to the first polarization 112 and the conference room is modified to include one or more display devices. The analyzed image 116(3) depicts a user 402, a table 404, a glass wall 406, a whiteboard 408, light fixtures 410, and a pair of display devices 420 on the far back wall. The pair of display devices 420 represent other users in the near or far site that are not physically present in the conference room (e.g., presented in a "gallery view" by a conferencing system in the conference room).

A variety of different features 118 are detected in the analyzed image 116(3), including features 430(1)-430(10). The first three features depicted are features 430(1), 430(2), and 430(3), which depict 3 users in the near or far site of a first display device 420 on the left side of the image. Feature 430(4) depicts the user 402 physically present in the conference room. Additionally, features 430(5), 430(6), and 430(7) depict 3 additional users in the near or far site of a second display device 420 on the right side of the image. Features 430(8), 430(9), and 430(10) depict three reflections of user 402 on the glass wall 406, table 404, and whiteboard 408.

The analyzed image 116(3) thus provides a count of 10 features. The section of the analyzed image 116(3) that includes the 10 features would be treated as being within the region of interest for video conferencing purposes. For example, the region of interest for analyzed image 116(3) would be region of interest 450 and would include the total 10 features detected. However, only feature 430(4) represents an actual user 402 present in the conference room and the correct region of interest should be a smaller portion of the analyzed image 116(3) that includes only the feature 430(4).

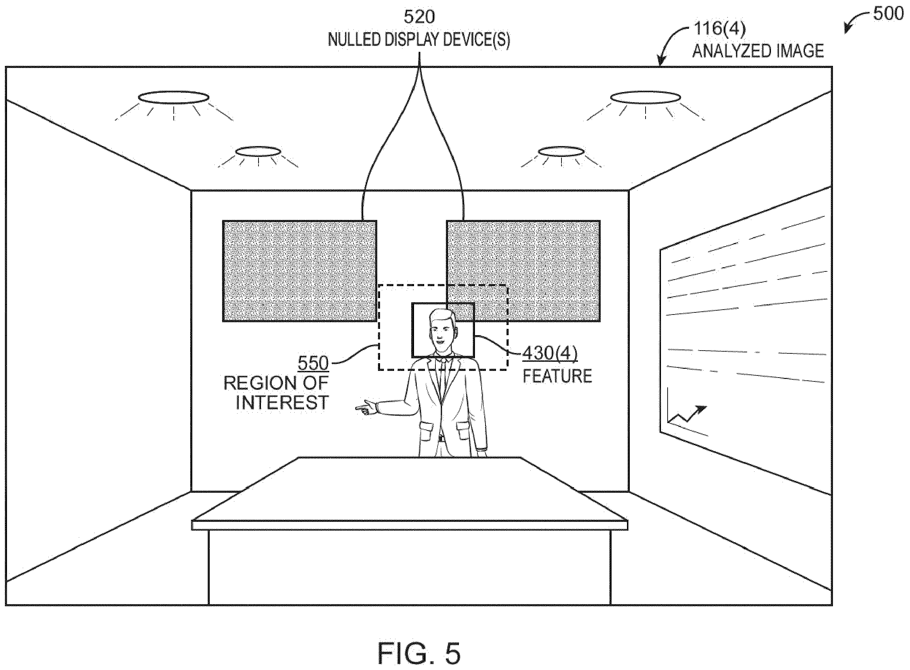

FIG. 5 depicts at 500 an analyzed image 116(4) from the image analysis module 114 when the polarizer 108 is set to a different polarization, which could be the second polarization 132 or a third polarization. The analyzed image 116(4) depicts black boxes where the display devices 420 are physically present. This is because the polarizer 108 with the changed polarization removes or attenuates the light from the display devices 420.

When the two display devices 420 are nulled, the number of features detected is greatly reduced. As shown, only 1 feature, feature 430(4), is detected in the analyzed image 116(4). The feature 430(4) represents the user 402 that is physically present in the conference room. A comparison of the analyzed image 116(3) and the analyzed image 116(4) shows a significant reduction in features, with the count of features being reduced from 10 in the analyzed image 116(3) to 1 in the analyzed image 116(4). Given the reduction of the features, the changed polarization is deemed to provide the minimum count of features. As such, the second polarization angle is saved and used as a setting for operating the device 104 in the future. In addition, the region of interest for analyzed image 116(4) would be region of interest 550 and would include only the user as the one feature 430(3).

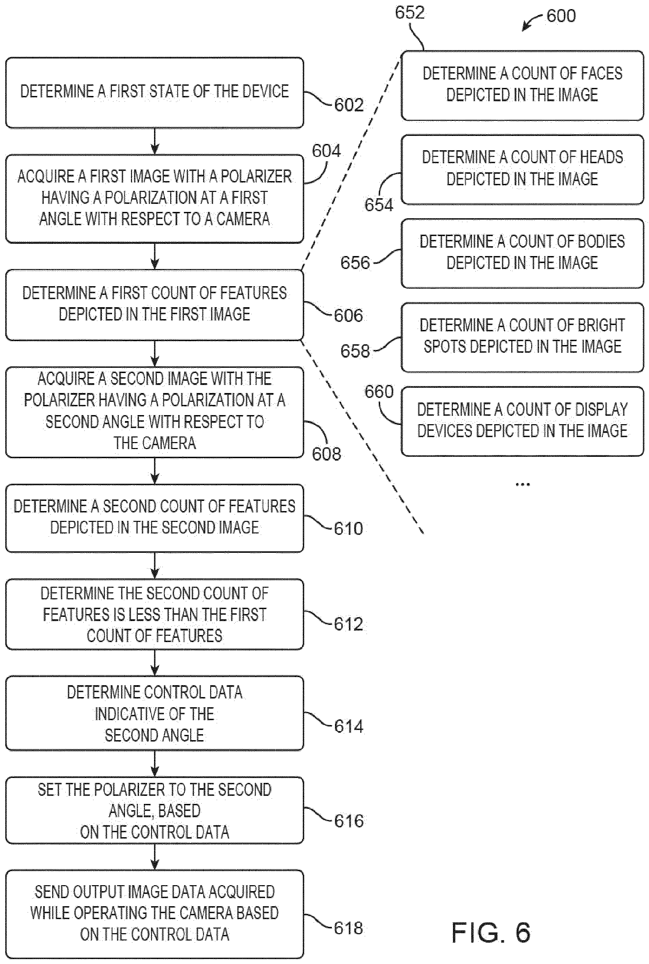

FIG. 6 illustrates at 600 a process to determine a polarization angle that reduces unwanted features. At 602, a first state is determined for device 104. A device 104 may be in a first state if the device 104 satisfies one or more conditions. For example, the device 104 may be in a first state if the device 104 is being initialized or set up for the first time. If so, the polarization angle that minimizes the count of features 118 is determined, saved, and used for operating the device 104.

Once the device 104 has been initially set up, the first state may be satisfied again if a certain amount of time has elapsed from the initial setup. This recalibration process is performed to check for changes in the conference room, such as changes to the surfaces or the addition of monitors to the conference room, that may necessitate testing and confirming the most effective polarization angle for removing unwanted features 118.

The first state may also be satisfied when a trigger condition is met. This may include detecting a change in the count of features 118 detected from a first time to a second time, particularly if the change is an increase in the count of features 118. A trigger condition may also be detected when there is a change in the camera orientation. In some implementations, a tilt or pan of the camera 106 may change the reflections picked up by the camera 106, which would necessitate a recalibration of the polarization angle between the polarizer and the camera 106.

At 604, a first image is acquired using the camera 106 with a polarizer 108 having a first polarization angle with respect to the camera 106. The first polarization angle may be an angle of 0 degrees or preferably any angle between 0-95 degrees relative to the camera 106.

At 606, a first count of features 118 is determined for the first image. The features 118 may be detected using one or more image processing techniques. In some embodiments, these features 118 may be determined using a machine learning process trained to identify faces, heads, bodies, and other features of interest. An example of features 118 that may be determined from an image are shown in steps 652-660, which exemplify a sub-process of 606.

The first count of features 118 at 606 may be determined. For example, a count of the faces depicted in an image at 652 may be determined. A face may be detected if a combination of eyes, a nose, a mouth, eyebrows, etc. are found within a certain area of the image. By contrast, a count of heads depicted in an image may be determined at 654. In yet another implementation, a count of bodies depicted in an image may be determined at 656. A count of bright spots may also be determined at 658 to identify portions of an image that have intensity values above a threshold. Alternatively, a count of display devices may be determined at 660. The image analysis module 114 may try to identify one type of feature described in 652-660 or a combination of features to produce an analyzed image 116 with features 118 depicted therein.

A second image is acquired at 608 when the polarizer 108 is set to a second polarization angle relative to a reference axis 170 associated with the camera 106. The polarization angle may be changed using a motor 110 to rotate the polarizer 108 or as a result of manual rotation by a user. For example, a user display may prompt the user to manually rotate the polarizer 108 until a certain polarization angle is set.

Using the second image, a second count of features 118 is determined at 610. For example, the second count of features 118 may be determined using the sub-process of 652-660 and may mirror the analysis used at 606. The second count of features 118 is then associated with the second polarization angle. For example, the second polarization angle may be set to 45 degrees or 90 degrees, which may result in a significant change in the count of features 118 from the first polarization angle to the second polarization angle.

The count of features 118 depicted in the first image is compared to the count of features detected in the second image. At 612, a determination is made that the second count of features 118 is less than the first count of features 118. As a result, control data 140 is determined at 614. The control data 140 indicates the second polarization angle, which yields the smaller count of features 118. This control data 140 is then used at 616 to set the polarizer 108 to the second polarization angle.

By setting the polarizer 108 to the second polarization angle, this setting may be used to operate the device 104, which minimizes the number of erroneous features that are detected when analyzing images acquired by the camera 106. At 618, output image 130 acquired while operating the camera 106 at the second polarization angle is transmitted to other components or applications. For example, the output image 130 may be transmitted to a video conferencing application or the like. As explained above, the process 600 may be performed during initial setup of the device 104 or at a later time to recalibrate the device 104 due to a trigger condition being met.

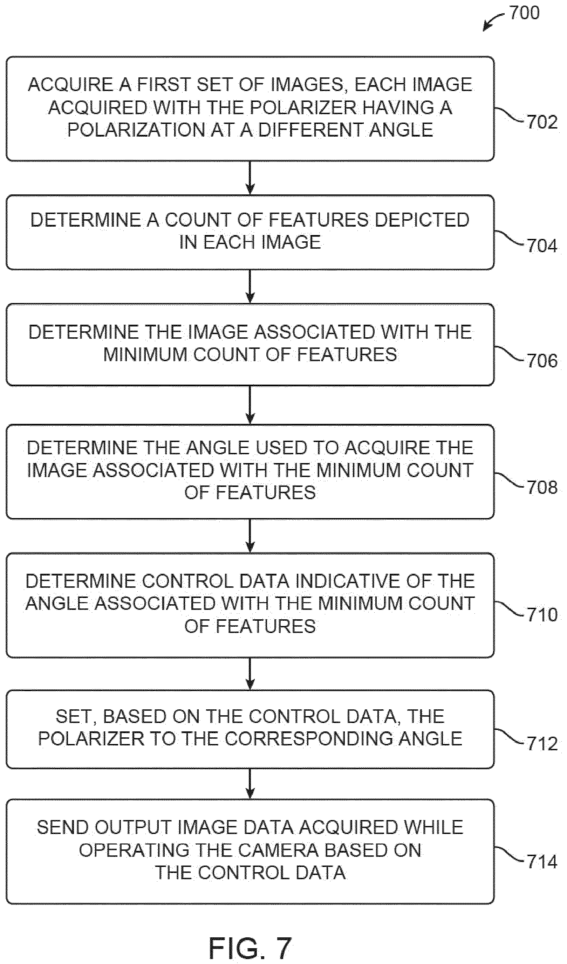

FIG. 7 illustrates at 700 another process to determine a polarization angle that reduces unwanted features 118. The process begins at 702 when a first set of images are acquired from a device 104 with a camera 106 and a polarizer 108. Each of the acquired images may be acquired with the polarizer 108 having a different polarization angle relative to the camera 106. For example, an image may be acquired with the polarizer 108 set to a polarization angle of 0 degrees, 45 degrees, and 90 degrees. In other implementations, additional angles between 0-95 degrees may be tested for fine tuning of a polarization angle.

At 704, a count of features 118 is determined for each of the images acquired at 702. For example, image processing techniques may be used to determine a count of faces detected in each acquired image 652, a count of heads detected in each acquired image 654, a count of displays 660, a count of bodies 656, or some combination of the above. A comparison of the count of features 118 for each image may be performed thereafter.

At 706, the image that is associated with the minimum count of features 118 is identified. At 708, the polarization angle that was used to acquire the image associated with the minimum count of features 118 is determined. For example, state data 120 associated with an analyzed image 116 may indicate the polarization angle used to acquire the image.

At 710, control data 140 is determined, which identifies the polarization angle that is associated with the minimum count of features 118. At 712, the polarizer 108 is set to the polarization angle that is determined at 710. The polarizer 108 may already be set to that polarization angle or may be rotated to the designated polarization angle. In other implementations, a user interface may be presented to a user via a display to guide or prompt the user to rotate the polarizer 108 back or forward until the corresponding polarization angle is set between the polarizer 108 and the camera 106.

The device 104, including the camera 106 and the polarizer 108 at the corresponding polarization angle, may then be operated to minimize the number of features 118 depicted in the analyzed image 116 and thus improve user experience during a conference call. At 714, output image 130 that is acquired while operating the camera 106 based on the control data 140, may then be sent to one or more output devices or applications. For example, output image 130 may be transmitted to a video conferencing application that may determine the region of interest, such as the region including the user in the conference room, and focus on that feature 118 during a video conference call. The process depicted in FIG. 7 may also be performed during initial setup or as a recalibration when a trigger condition or timeframe is met.

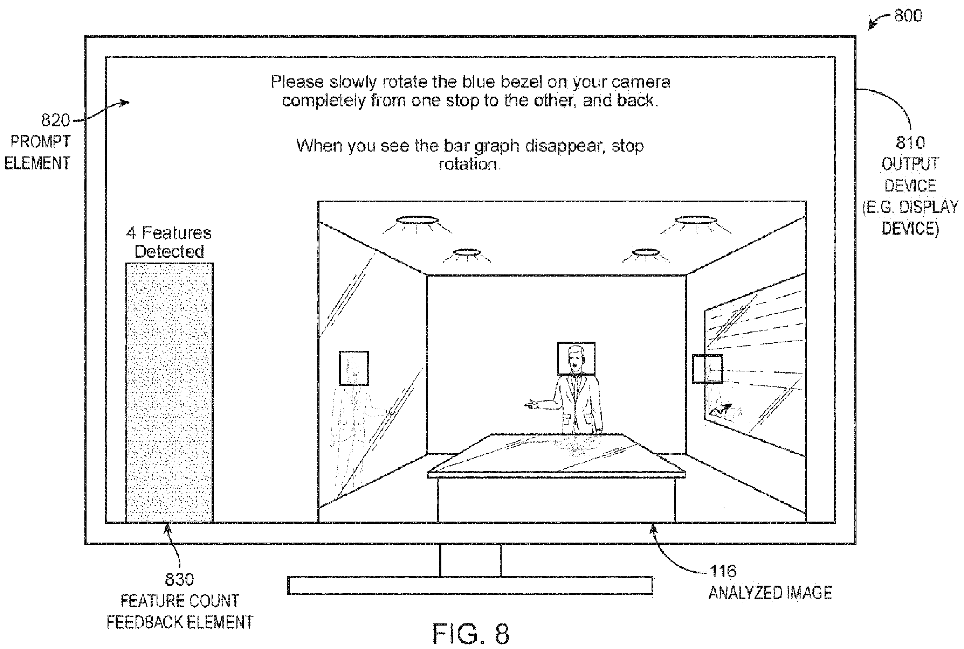

FIG. 8 depicts at 800 a user interface to direct manipulation of a polarizer 108 to reduce unwanted features. As shown, an output device 810 may comprise a display device with a user interface presented therein. For example, the output device 810 may be configured to provide output data that may be seen by a user. In addition, the output device 810 may be located close to the device 104 with the camera 106 and the polarizer 108 so that the user may manually rotate the polarizer 108 and see the user interface presented on the output device 810.

As shown, the output device 810 includes a prompt element 820. The prompt element 820 may include text, images, or both to provide a notification or instructions for a user to rotate the polarizer 108 to a certain angle or until a certain condition is satisfied. For example, the prompt element 820 may indicate that the polarizer 108 on the camera 106 or close to the camera 106 should be rotated from one stop or position to another stop or position. Alternatively, the prompt element 820 may also indicate when the rotation should stop, such as when a user interface element disappears.

The output device 810 may also include a feature count element 830 and an image, such as the analyzed image 116. When a certain polarization angle is being tested, the analyzed image 116 may be displayed to show a visual representation of the scene 102 and the features depicted in that image. The feature count feedback element 830 may also provide text and image elements to indicate the specific count of features 118 detected in the analyzed image 116.

As the user manually rotates the polarizer 108 to change the polarization angle, the prompt element 820, analyzed image 116, and feature count feedback element 830 may also change to indicate the analyzed image 116 and the count of features 118 at the current polarization angle. For example, the prompt element 820 may indicate the desired polarization stop has been reached, while the resulting analyzed image 116 and the feature count feedback element 830 may provide the current count of features at that polarization angle. When the results are completed, the prompt element 820 may then be updated to provide new instructions for the user to rotate the polarizer 108 to test the next stop or polarization angle, while the resulting analyzed image 116 and feature count feedback element 830 may provide the updated results at the new polarization angle. In even further implementations, the output device 810 may also provide additional text or images when the minimum number of features 118 has been reached.

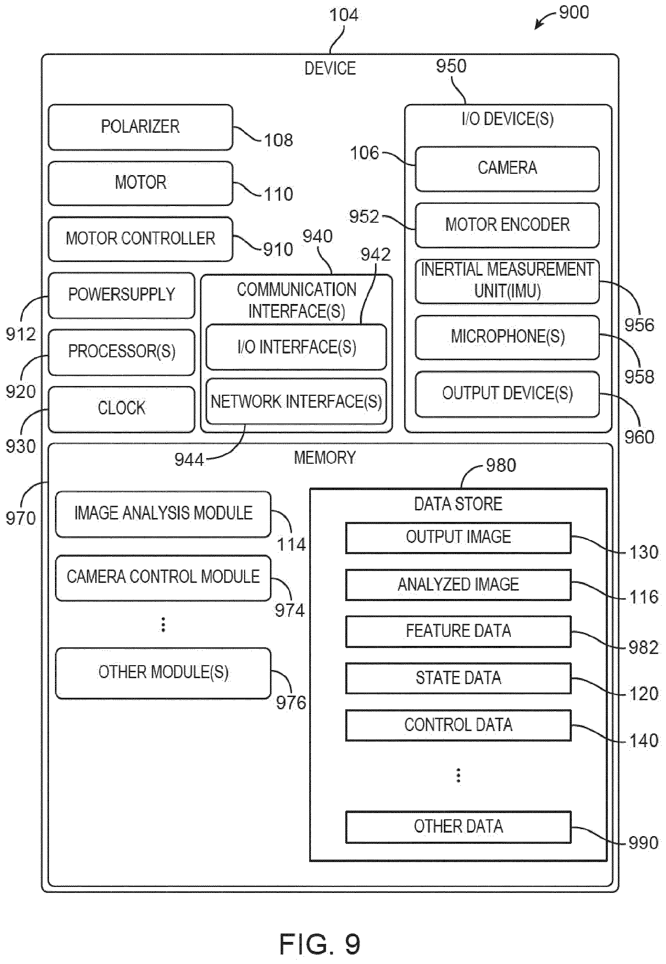

FIG. 9 depicts at 900 a block diagram of the device 104 to determine a polarization angle that reduces unwanted features 118. The device 104 includes a polarizer 108. The polarizer 108 may comprise a filter that is substantially transmissive to light of a particular polarization, while substantially absorbing or reflecting light with another polarization. The polarization may be one or more of linear or circular. In some implementations, a first polarization may be linear while a second polarization may be circular. In another example, the first polarization may be linear with a first angle and the second polarization may be linear with a second angle. When linear polarization is used, the first polarization and the second polarization may be perpendicular to one another. For example, the first polarization may exhibit a first angle of 0 degrees with respect to a particular reference point, while the second polarization exhibits a second angle of 90 degrees.

The polarizer 108 may comprise a dichroic material or structure or film that passes light with a linear polarization. For example, the polarizer 108 may comprise aligned polyvinylene chains, silver nanoparticles embedded in a transparent substrate such as glass, and so forth. In other implementations, other polarization devices may be used, including but not limited to wire-grid polarizers, beam-splitting polarizers, quarter-wave plates, liquid crystals, photoelastic modulators, and so forth. For example, the photoelastic modulator may comprise a device that is controlled by an electrical signal which drives a piezoelectric transducer to vibrate a half wave resonant bar, such as fused silica. By changing the frequency of the signal, the frequency of the vibration produced by the transducer is changed, and the polarization of light through the resonant bar may be selected.

In another implementation, the polarizer 108 may comprise a structure such as a wheel or carrier assembly with two or more sections, each section conveying material with a different polarization orientation. For example, the wheel may comprise a first section with a first window that passes light with a first polarity and a second section with a second window that passes light with a second polarity. A motor, such as the motor 110, may be used to rotate the wheel to place a particular segment in front of camera 106.

The device 104 also includes the motor 110 which may be an electric motor that is controlled by a motor controller 910. The motor 110 is used to rotate at least a portion of the polarizer 108 to change the orientation of the polarizer 108 relative to the camera 106. In embodiments utilizing an electronically variable polarizer 108 such as a photoelastic modulator, the motor 110 may be omitted and the electronically variable polarizer 108 may be operated using appropriate circuitry. In some embodiments, the motor 110 is not used in the device 104. Instead, the polarizer 108 is rotated or set to different angles by prompting a user to manually rotate the polarizer 108.

The device 104 also includes a power supply 912 for providing power to the various components of the device 104. The power supply 912 may comprise batteries, capacitors, fuel cells, photovoltaic cells, wireless power receivers, conductive couplings suitable for attachment to a first modality power source such as provided by an electric utility, and so forth.

Processors 920 help operate the various components of the device 104. For example, the processors 920 may comprise a microcontroller, system on a chip (SoC), single board computer, and so forth. In one implementation, the processors 920 may operate the camera 106, polarizer 108, motor 110, and so forth. The processors 920 are configured to execute stored instructions.

The device 104 also includes one or more clocks 930. The clocks 930 may provide information indicative of date, time, ticks, and so forth. For example, the processors 920 may use data from the clocks 930 to associate a particular image or frame with a particular point in time.

The device 104 further includes communication interfaces 940 such as input/output (I/O) interfaces 942, network interfaces 944, and so forth. The communication interfaces 940 enable device 104, or components thereof, to communicate with other devices or components. The I/O interfaces 942 may comprise Inter-Integrated Circuit (I2C), Serial Peripheral Interface bus (SPI), Universal Serial Bus (USB) as promulgated by the USB Implementers Forum, RS-232, and so forth. The network interfaces 944 may be configured to provide communications between the device 104 and other devices, such as routers, access points, and so forth. The network interfaces 944 may include devices configured to couple to personal area networks (PANs), local area networks (LANs), wireless local area networks (WLANS), wide area networks (WANs), and so forth. For example, the network interfaces 944 may include devices compatible with Ethernet, Wi-Fi, Bluetooth, ZigBee, and so forth.

The I/O interface(s) 942 may couple to one or more I/O devices 950. The I/O devices 950 may include devices such the camera 106, a motor encoder 952, an inertial measurement unit 956, microphones 958, and so forth. The I/O devices 950 may also include output devices 960 such as one or more of a display device, printer, audio speakers, and so forth. In some embodiments, the I/O devices 950 may be physically incorporated with the device 104 or may be externally placed.

The camera 106 is configured to generate image data, send the image data to other components or devices, and so forth. Cameras 106 may include imaging sensors configured to acquire images of a scene, such as a conference room.

The motor encoder 952 is used to track the movement of the motor 110. For example, the motor encoder 952 provides a feedback signal by tracking the speed and/or position of a motor shaft of the motor 110. Similarly, the inertial measurement unit (IMU) 956 is used to detect movement of the camera 106. The IMU 956 may comprise one or more gyroscopes, one or accelerometers, and one or more magnetometers to measure the rate of movement of the camera 106 and orientation information associated with the camera 106. For example, the IMU 956 may track movement of the camera due to a pan or tilt that changes the orientation of the camera 106.

The I/O devices 950 also include microphones 958. The microphones 958 may be configured to acquire information indicative of sound present in an environment, such as a conference room. In some implementations, arrays of microphones 958 may be used.

Other output devices 960 may also be part of the device 104.

The device 104 also includes a memory 970 with various modules, including the image analysis module 114, a camera control module 974, and other modules 976. The memory 970 may comprise one or more non-transitory computer-readable storage media (CRSM). The CRSM may be any one or more of an electronic storage medium, a magnetic storage medium, an optical storage medium, a quantum storage medium, a mechanical computer storage medium, and so forth. The memory 970 provides storage of computer-readable instructions, data structures, program modules, and other data for the operation of the device 106. A few example functional modules are shown stored in the memory 970, although the same functionality may alternatively be implemented in hardware, firmware, or as a system on a chip (SoC).

The image analysis module 114 performs various processing of images acquired by the camera 106. Such analysis includes facial recognition techniques or object recognition techniques that help identify features 118 representative of users in a conference room. For example, the image analysis module 114 may process raw image data from the camera 106 to detect faces, heads, or bodies of users.

The camera control module 974 may determine the current location of the camera 106. Based on camera settings, the camera control module 974 may direct the movement of the camera 106. For example, the camera control module 974 may control movement of the camera 106, such as a pan or tilt of the camera 106.

Other modules 976 may also be present in the memory 970.

Also stored in the memory 970 may be a data store 980 that stores various types of data. The data store 980 may use a flat file, database, linked list, tree, executable code, script, or other data structure to store information. In some implementations, the data store 980 or a portion of the data store 980 may be distributed across one or more other devices.

As shown, the data store 980 may be used to store output image 130 which may be used for other uses or applications, such as for video conferencing. The analyzed image 116 comprises a visual output of image data that has been processed by the image analysis module 114.

Based on the state data 120, control data 140 is generated and stored within the data store 980. The control data 140 is indicative of the polarization angle that minimizes the number of features 118 depicted in an image. As such, the control data 140 may be used as a setting for the polarizer 108 when operating the device 104.

The data store 980 may also include other data 990.

The processes discussed herein may be implemented in hardware, software, or a combination thereof. In the context of software, the described operations represent computer-executable instructions stored on one or more non-transitory computer-readable storage media that, when executed by one or more processors, perform the recited operations. Generally, computer-executable instructions include routines, programs, objects, components, data structures, and the like that perform particular functions or implement particular abstract data types. Those having ordinary skill in the art will readily recognize that certain steps or operations illustrated in the figures above may be eliminated, combined, or performed in an alternate order. Any steps or operations may be performed serially or in parallel. Furthermore, the order in which the operations are described is not intended to be construed as a limitation.

Embodiments may be provided as a software program or computer program product including a non-transitory computer-readable storage medium having stored thereon instructions (in compressed or uncompressed form) that may be used to program a computer (or other electronic device) to perform processes or methods described herein. The computer-readable storage medium may be one or more of an electronic storage medium, a magnetic storage medium, an optical storage medium, a quantum storage medium, and so forth. For example, the computer-readable storage media may include, but is not limited to, hard drives, optical disks, read-only memories (ROMs), random access memories (RAMs), erasable programmable ROMs (EPROMs), electrically erasable programmable ROMs (EEPROMs), flash memory, magnetic or optical cards, solid-state memory devices, or other types of physical media suitable for storing electronic instructions. Further, embodiments may also be provided as a computer program product including a transitory machine-readable signal (in compressed or uncompressed form). Examples of transitory machine-readable signals, whether modulated using a carrier or unmodulated, include, but are not limited to, signals that a computer system or machine hosting or running a computer program may be configured to access, including signals transferred by one or more networks. For example, the transitory machine-readable signal may comprise transmission of software by the Internet.

Separate instances of these programs may be executed on or distributed across any number of separate computer systems. Thus, although certain steps have been described as being performed by certain devices, software programs, processes, or entities, this need not be the case, and a variety of alternative implementations will be understood by those having ordinary skill in the art.

Additionally, those having ordinary skill in the art will readily recognize that the techniques described above may be utilized in a variety of devices, environments, and situations. Although the subject matter has been described in language specific to structural features or methodological acts, it is to be understood that the subject matter defined in the appended claims is not necessarily limited to the specific features or acts described. Rather, the specific features and acts are disclosed as illustrative forms of implementing the claims.

## Claims

1. A system (100) comprising:
a camera (106) comprising a lens;
a polarizer (108) positioned in front of the lens;
a motor (110) configured to rotate at least a portion of the polarizer;
a memory (970) storing computer-executable instructions; and
a hardware processor (920) coupled to the camera, the motor, and the memory, the hardware processor configured to execute the computer-executable instructions to:
acquire, from the camera, a first image (116(1)) with the polarizer at a first angle (112);
determine a first count of features (118(1)) depicted in the first image;
acquire, from the camera, a second image (116(2)) with the polarizer at a second angle (132);
determine a second count of features (118(2)) depicted in the second image;
determine the second count of features is less than the first count of features (612); and
set the polarizer to the second angle (140) using the motor.

2. The system of claim 1, wherein the features comprise one or more:
a face (652) of a user,
a head (654) of the user, or
a body (656) of the user; and
the hardware processor to further execute the computer-executable instructions to:
process the first image using image processing to determine the first count of features depicted in the first image (606); and
process the second image using image processing to determine the second count of features depicted in the second image (610).

3. The system of claim 1, wherein the features comprise one or more of:
one or more portions of the first image or the second image having an intensity value greater than a threshold (430(8)-(10)), or
one or more monitors (420).

4. The system of claim 1, wherein the first angle (A1) and the second angle (A2) are angles ranging from 0 degrees to 95 degrees.

5. The system of claim 1, the hardware processor configured to further execute the computer-executable instructions to:
operate the motor to rotate the polarizer to the first angle (A1); and
operate the motor to rotate the polarizer to the second angle (A2).

6. The system of claim 1, wherein the polarizer comprises a wheel (108) with a plurality of sections, and the hardware processor to further execute the computer-executable instructions to:
operate the motor to rotate the wheel to place a first section of the wheel in front of the camera (702), wherein the first section of the wheel comprises a first polarization orientation (702); and
operate the motor to rotate the wheel to place a second section of the wheel in front of the camera (702), wherein the second section of the wheel comprises a second polarization orientation that is different from the first polarization orientation (702).

7. The system of claim 1, the hardware processor further configured to execute the computer-executable instructions to:
determine a predetermined amount of time has elapsed since the polarizer was set to the second angle (602);
acquire, using the camera, a third image with the polarizer at a third angle (604);
determine a third count of features depicted in the third image (606);
acquire, using the camera, a fourth image with the polarizer at a fourth angle (608);
determine a fourth count of features depicted in the fourth image (610);
determine the fourth count of features is less than the third count of features (612); and
set the polarizer to the fourth angle (616) using the motor.

8. The system of claim 1, the hardware processor further configured to execute the computer-executable instructions to:
detect a change in a count of features, at a first time after the polarizer is set to the second angle (602);
determine a third image with the polarizer at a third angle (604);
determine a third count of features depicted in the third image (606);
determine a fourth image with the polarizer at a fourth angle (608);
determine a fourth count of features depicted in the fourth image (610);
determine the fourth count of features is less than the third count of features (612); and
set the polarizer to the fourth angle (616) using the motor.

9. The system of claim 1, the hardware processor further configured to execute the computer-executable instructions to:
determine a change in orientation of the camera, at a first time after the polarizer is set to the second angle (602);
determine a third image with the polarizer at a third angle (604);
determine a third count of features depicted in the third image (606);
determine a fourth image with the polarizer at a fourth angle (608);
determine a fourth count of features depicted in the fourth image (610);
determine the fourth count of features is less than the third count of features (612); and
set the polarizer to the fourth angle (616) using the motor.

10. The system of claim 9, wherein the change in orientation of the camera is determined based on one or more of:
data from a motor encoder (952),
an inertial measurement unit (956), or
a comparison of images from a first time to a second time (602).

11. The system of claim 1, wherein the features comprise faces of users (652); and the hardware processor to execute the computer-executable instructions to:
determine the second image depicts a face of a user (652);
designate a portion of the second image that depicts the face of the user as a region of interest (350); and
send as output the portion of the second image that is within the region of interest (618).

12. A system (100) comprising:
a camera (106);
a polarizer (108) positioned in an optical path of the camera;
a memory (970) storing computer-executable instructions; and
a hardware processor (920) coupled to the camera and the memory, the hardware processor configured to execute the computer-executable instructions to:
acquire, using the camera, a first image (116(1)) with a first polarization angle (112);
determine a first count of features (118(1)) depicted in the first image;
acquire, using the camera, a second image (116(2)) with a second polarization angle (132);
determine a second count of features (118(2)) depicted in the second image;
determine the first count of features is less than the second count of features (706); and
determine control data (140) indicative of the first polarization angle, responsive to the first count of features being less than the second count of features (710).

13. The system of claim 12, further comprising a motor (110) configured to rotate the polarizer (108); and
the hardware processor configured to further execute the computer-executable instructions to:
operate the motor to rotate the polarizer to the first polarization angle, prior to acquiring the first image (702);
operate the motor to rotate the polarizer to the second polarization angle, prior to acquiring the second image (702); and
operate the motor to rotate the polarizer to the first polarization angle, based on the control data (702).

14. The system of claim 12, further comprising a display; and the hardware processor configured to further execute the computer-executable instructions to:
provide a user interface on the display (810), the user interface indicative of the first polarization angle (112);
detect the polarizer is set to the first polarization angle, wherein the first image is acquired after the polarizer is set to the first polarization angle (702);
provide an update to the user interface (820), the update indicative of the second polarization angle (132);
detect the polarizer is set to the second polarization angle, wherein the second image is acquired after the polarizer is set to the second polarization angle (702);
provide a second update to the user interface, based on the control data, the second update indicative of the first polarization angle (800); and
detect the polarizer is set to the first polarization angle (702).

15. The system of claim 12, wherein the polarizer comprises one or more of:
a polarizing film (108),
a wire polarizer (108),
a photoelastic modulator (108), or
a wheel with a plurality of portions, each portion having a different polarization orientation (108).

16. A method (700) comprising:
acquiring a first image with a camera having a polarizer with a first polarization angle (702);
determining a first count of features depicted in the first image (704);
acquiring a second image with the camera having the polarizer with a second polarization angle (702);
determining a second count of features depicted in the second image (704);
acquiring a third image with the camera having the polarizer with a third polarization angle (702);
determining a third count of features depicted in the third image (704);
comparing the first count of features, the second count of features, and the third count of features (704);
determining the second count of features is less than the first count of features and the third count of features (706);
directing the polarizer to the second polarization angle, responsive to the determining that the second count of features is less than the first count of features and the third count of features (710-712); and
acquiring image data using the camera having the polarizer at the second polarization angle (714).

17. The method of claim 16, further comprising:
detecting a face (652) of a user in a fourth image (652);
designating a portion of the fourth image that includes the face of the user as a region of interest (350); and
sending as output the portion of the fourth image that is within the region of interest (618).

18. The method of claim 16, further comprising:
performing image processing on the first image to determine the first count of features (606), the first count of features representing a first count of faces depicted in the first image (652);
performing image processing on the second image to determine the second count of features (606), the second count of features representing a second count of faces depicted in the second image (652); and
performing image processing on the third image to determine the third count of features (606), the third count of features representing a third count of faces depicted in the third image (652).

19. The method of claim 16, further comprising:
directing the polarizer (108) to the first polarization angle using a motor (110), prior to acquiring the first image (702);
directing the polarizer to the second polarization angle using the motor, prior to acquiring the second image (702); and
directing the polarizer to the third polarization angle using the motor, prior to acquiring the third image (702).

20. The method of claim 16, further comprising:
presenting first data (820) on a user interface of a display (810), the first data indicative of the first polarization angle (702);
detecting the polarizer (108) is set to the first polarization angle prior to acquiring the first image (702);
presenting second data (820) on the user interface, the second data indicative of the second polarization angle (702);
detecting the polarizer is set to the second polarization angle prior to acquiring the second image (702);
presenting third data (820) on the user interface, the third data indicative of the third polarization angle (702); and
detecting the polarizer is set to the third polarization angle prior to acquiring the third image (702).
